# EUROPÄISCHE PATENTSCHRIFT

(11) **EP 4 327 172 B1**
(45) Veröffentlichungstag und Bekanntmachung des Hinweises auf die Patenterteilung: **03.09.2025**
(21) Anmeldenummer: 22714766.7
(22) Anmeldetag: 16.03.2022
(51) Int. Cl.: G05D 1/00

(54) **VERFAHREN ZUM AUTOMATISCHEN STEUERN EINES FAHRZEUGS**
METHOD FOR AUTOMATICALLY CONTROLLING A VEHICLE
PROCÉDÉ DE COMMANDE AUTOMATIQUE D'UN VÉHICULE

(30) Priorität: 23.04.2021 DE 102021204049
(43) Veröffentlichungstag der Anmeldung: 28.02.2024
(73) Patentinhaber: Continental Automotive Technologies GmbH, 30175 Hannover (DE)
(72) Erfinder: STÄHLIN, Ulrich, 60488 Frankfurt am Main (DE)
(74) Vertreter: Aumovio Corporation
(86) Internationale Anmeldenummer: PCT/DE2022/200043
(87) Internationale Veröffentlichungsnummer: WO 2022/223081

(56) Entgegenhaltungen:
- CN-A- 107 063 711
- DE-A1- 102014 224 077
- DE-A1- 102015 201 209
- DE-A1- 102015 208 062

## Beschreibung

Die Erfindung betrifft ein Verfahren zum automatischen Steuern eines Fahrzeugs, insbesondere basierend auf einer Fahrvorgabe.

Eine automatische Steuerung eines Fahrzeugs im Rahmen einer Fahrvorgabe kann beispielsweise als Automatic Valet Parking (AVP) ausgeführt sein. Dabei handelt es sich um ein System, bei welchem ein Fahrzeug in einem Parkhaus abgestellt wird und die Insassen aussteigen können. Das Fahrzeug wird dann durch eine automatische Steuerung, welche zumindest im Wesentlichen auf einer im Parkhaus verbauten Sensorik und Infrastruktur basiert, zu einem freien Parkplatz gelenkt und in diesem geparkt. Kommen die Insassen zurück und möchten ihr Fahrzeug wieder übernehmen, wird das Fahrzeug ebenso wieder auf einen Übergabeplatz gefahren.

Entsprechende Systeme befinden sich derzeit in Entwicklung und Standardisierung, beispielsweise im Rahmen der Norm ISO 23374. Dabei ist insbesondere vorgesehen, dass das Fahrzeug selbst nicht zwingend Umfeldsensoren zu haben braucht, um an dem System teilzunehmen. Dementsprechend muss sich das Fahrzeug auf die Infrastruktur verlassen können, von welcher es Fahrvorgaben erhält. Befinden sich beispielsweise auch andere Fahrzeuge oder Personen in einem Parkhaus, ist es wichtig, dass die automatische Steuerung des Fahrzeugs sehr zuverlässig ist und auch bei unvorhergesehenen Ereignissen, beispielsweise ausgelöst durch unvorsichtige Personen, zügig reagieren kann.

In der DE 10 2014 224 077 A1 ist ein Verfahren zur automatischen Steuerung eines Fahrzeug durch eine externe Infrastruktur gezeigt. In der CN 102015201209 A1 ist ein Verfahren zur Prüfung eines autonom Fahrzeugs gezeigt, wobei ein Hindernis in den Fahrweg bewegt wird und geprüft wird, ob das Fahrzeug auf das Hindernis reagiert. In der DE 10 2015 208 062 A1 ist ein Verfahren zur Überprüfung der Betriebssicherheit eines autonomen Parksystems gezeigt, wobei geprüft wird, ob en Testfahrzeug bestimmte Strecken korrekt abfährt. In der DE 10 2015 201 209 A1 ist ein Autonomes Parksystem gezeigt, bei dem Trajektorien der Fahrzeuge so erstellt werden, dass mögliche Überschneidungsbereiche der Trajektorien in Bereichen liegen, in denen eine hohe Genauigkeit der Überwachung durch Sensoren vorliegt.

Es ist deshalb eine Aufgabe der Erfindung, ein Verfahren zum automatischen Steuern eines Fahrzeugs vorzusehen, welches im Vergleich zu bekannten Ausführungen alternativ oder besser ausgeführt ist. Dies wird erfindungsgemäß durch ein Verfahren gemäß Anspruch 1 erreicht. Vorteilhafte Ausgestaltungen können beispielsweise den Unteransprüchen entnommen werden. Der Inhalt der Ansprüche wird durch ausdrückliche Inbezugnahme zum Inhalt der Beschreibung gemacht.

Die Erfindung betrifft ein Verfahren zum automatischen Steuern eines Fahrzeugs, wobei das Verfahren folgende Schritte aufweist:
- Empfangen einer Fahrvorgabe von einer externen Infrastruktur,
- in einem Normalbetrieb Steuern des Fahrzeugs entlang einer Trajektorie, welche durch die Fahrvorgabe vorgegeben wird,
- in einem Testbetrieb Steuern des Fahrzeugs entlang einer Testtrajektorie, welche von der durch die Fahrvorgabe vorgegebenen Trajektorie abweicht, und/oder mit Testparametern, wobei
- während des Testbetriebs überprüft, ob von der Infrastruktur ein Fehlersignal empfangen wird, und
- Das Fahrzeug gestoppt wird und/oder eine Fehlermeldung ausgegeben wird, wenn innerhalb eines vorgegebenen Zeitraums im Testbetrieb kein Fehlersignal empfangen wird.

Durch ein solches Verfahren kann absichtlich ein Zustand herbeigeführt werden, welcher von der Fahrvorgabe abweicht, und es kann dadurch getestet werden, ob die externe Infrastruktur dies erkennt. Dementsprechend kann überprüft werden, ob die Infrastruktur bezüglich der Fehlererkennung ausreichend ist.

Durch die Überprüfung im Testbetrieb, ob von der Infrastruktur ein Fehlersignal empfangen wird, kann erkannt werden, ob die Infrastruktur auf die Abweichung von der vorgegebenen Trajektorie und/oder auf die Testparameter reagiert.

Wird kein solches Fehlersignal empfangen, deutet dies typischerweise darauf hin, dass die Infrastruktur nicht richtig funktioniert, da sie die Abweichung von der vorgegebenen Trajektorie und/oder die Verwendung der Testparameter nicht korrekt erkannt hat. In diesem Fall ist ein sofortiger Stopp des Fahrzeugs angebracht, da die Infrastruktur offenbar nicht zuverlässig funktioniert.

Bei dem Fahrzeug kann es sich beispielsweise um ein Kraftfahrzeug, beispielsweise einen PKW, handeln. Auch für andere Fahrzeuge kann das Verfahren jedoch angewendet werden. Die Fahrvorgabe kann beispielsweise über eine Funkkommunikation empfangen werden. Sie kann insbesondere laufend aktualisiert werden, während sich das Fahrzeug bewegt. Die externe Infrastruktur kann beispielsweise Sensoren und/oder Kameras aufweisen und basierend darauf die Fahrvorgabe erstellen und an das Fahrzeug senden.

Der Normalbetrieb ist typischerweise derjenige Betrieb, welchen das Fahrzeug verwendet, wenn es sich normal von der Infrastruktur steuern lässt. In den Testbetrieb kann zu bestimmten Zeitpunkten gewechselt werden, beispielsweise wie weiter unten angegeben. Die Testtrajektorie kann in geeigneter Weise von der vorgegebenen Trajektorie abweichen, um die Erkennung zu überprüfen. Testparameter können sich beispielsweise auf bestimmte Funktionalitäten des Fahrzeugs wie eine elektrisch betätigte Heckklappe oder eine Beleuchtung beziehen, wobei auch dies typischerweise von der externen Infrastruktur erkannt werden sollte.

Das Fehlersignal kann insbesondere einen Fehlerhinweis und/oder ein Stoppsignal und/oder eine neue Trajektorie und/oder neue Wegpunkte beinhalten. Ein Fehlerhinweis kann beispielsweise eine elektronische Nachricht sein, welche auf eine Fehlfunktion am Fahrzeug hinweist. Ein Stoppsignal kann zum unmittelbaren Anhalten auffordern. Eine neue Trajektorie kann beispielsweise so geschaffen sein, dass sie eine Abweichung korrigiert. Gleiches gilt für neue Wegpunkte, welchen das Fahrzeug folgen kann bzw. welche eine neue Trajektorie definieren können.

Die Fehlermeldung kann insbesondere über eine Funkverbindung an die Infrastruktur gesendet werden und/oder durch Betätigung einer optischen und/oder einer akustischen Warneinrichtung ausgegeben werden. Durch das Senden über eine Funkverbindung kann die Infrastruktur über ihre Fehlfunktion informiert werden. Es können dann beispielsweise geeignete Maßnahmen eingeleitet werden. Eine optische Warneinrichtung kann beispielsweise eine Warnblinkanlage oder eine andere Beleuchtungseinrichtung sein. Eine akustische Warneinrichtung kann beispielsweise eine Hupe sein.

Die Fehlermeldung kann insbesondere Informationen über einen Standort des Fahrzeugs und/oder über einen Kurs des Fahrzeugs und/oder über die Trajektorie und/oder über die Testtrajektorie enthalten. Dadurch kann die Information über den Fehler noch weiter spezifiziert werden, um eine Fehlersuche zu erleichtern. Jede Kombination oder Unterkombination der angegebenen Werte ist möglich, ebenso können auch weitere Werte verwendet werden.

Bevorzugt wird nach dem Empfang des Fehlersignals in den Normalbetrieb gewechselt. Wird das Fehlersignal erhalten, bedeutet dies, dass die Infrastruktur das absichtliche Fehlverhalten des Fahrzeugs korrekt erkannt hat. Auf die Infrastruktur ist somit Verlass und es kann normal weitergefahren werden.

Es sei erwähnt, dass das Fehlersignal gemäß der hierin verwendeten Terminologie ein Signal ist, welches von der Infrastruktur an das Fahrzeug gesendet wird.

Demgegenüber ist die Fehlermeldung eine Meldung, welche von dem Fahrzeug an die Infrastruktur gesendet wird.

Die Testparameter können beispielsweise ein Öffnen einer Heckklappe oder eines anderen Elements am Fahrzeug, ein Abschalten eines oder mehrerer Lichter des Fahrzeugs und/oder ein Aktivieren einer Warnblinkanlage oder eines oder mehrerer Lichter des Fahrzeugs vorgeben. Auch dies kann je nach Ausführung typischerweise von der Infrastruktur erfasst werden und es kann damit überprüft werden, ob die Erfassung korrekt funktioniert. Ein Öffnen einer Heckklappe kann insbesondere in einem Bereich eines Parkhauses erfolgen, in welchem eine dafür notwendige Höhe nicht vorhanden ist. Typischerweise wird das Öffnen der Heckklappe dann rechtzeitig gestoppt, um eine Beschädigung zu vermeiden. An einer solchen Stelle sollte aber die Infrastruktur besonders aufmerksam dahingehend sein, dass ein Öffnen der Heckklappe auch tatsächlich erkannt wird.

Die Steuerung des Fahrzeugs kann insbesondere ohne Verwendung von Daten fahrzeugeigener Umfeldsensoren erfolgen. Auf derartige Sensoren bzw. deren diesbezügliche Verwendung und Programmierung kann somit verzichtet werden.

Gemäß einer Ausführung erfolgt die Steuerung des Fahrzeugs mit Verwendung von Daten fahrzeugeigener Umfeldsensoren, wobei insbesondere basierend auf einer Reaktion der Infrastruktur auf den Testbetrieb die Steuerung hinsichtlich Gewichtung von Umfeldsensoren und Infrastruktur geändert wird. Dadurch kann die Gewichtung an die Zuverlässigkeit der Infrastruktur angepasst werden. Beispielsweise kann ein Parameter vorgesehen werden, welcher angepasst werden kann und welcher vorgibt, zu welchem Grad auf die Umfeldsensoren und zu welchem Grad auf die Infrastruktur bei der Steuerung des Fahrzeugs geachtet wird.

Die Testtrajektorie kann insbesondere mit einer zufälligen Abweichung von der Trajektorie festgelegt werden. Hierzu kann beispielsweise ein Zufallsgenerator verwendet werden. Die Testtrajektorie kann auch mit einer vorgegebenen Abweichung von der Trajektorie festgelegt werden. Diese vorgegebene Abweichung kann beispielsweise fest eingespeichert sein.

Insbesondere kann zu zufällig ausgewählten Zeitpunkten und/oder in regelmäßigen Abständen vom Normalbetrieb in den Testbetrieb gewechselt werden.

Es kann auch basierend auf Daten von fahrzeugeigenen Umfeldsensoren bestimmt werden, wann in den Testbetrieb gewechselt wird. Dies kann beispielsweise an folgenden Stellen erfolgen:
- An engen Stellen; hier wird insbesondere eine schnelle Reaktion der Infrastruktur erwartet.
- An für das Fahrzeug unübersichtlichen Stellen; hier wird ebenfalls eine schnelle Reaktion erwartet.
- An Stellen mit viel Platz und ohne Verkehr; hier kann auch eine langsame Reaktion immer noch in Ordnung sein.
- In Bereichen mit Personen in der Umgebung; hier wird eine schnelle Reaktion erwartet wegen hohem Gefahrenpotenzial.
- In Bereichen mit schlechter Beleuchtung; hier kann insbesondere ein Kamerasystem geprüft werden, oder es kann geprüft werden, ob genug Redundanz durch andere Erkennungssysteme vorhanden ist. Diese Variante kann insbesondere dahingehend erweitert werden, dass das Parkhaus das Licht in zufälligen Intervallen abstellt und die Reaktion überprüft wird.

Die Fahrvorgabe kann insbesondere die Trajektorie dadurch vorgeben, dass sie die Trajektorie und/oder Wegpunkte beinhaltet. Dies erlaubt eine praktikable Vorgabe der Trajektorie.

Die Erfindung betrifft des Weiteren ein Fahrzeugsteuerungsmodul, welches dazu konfiguriert ist, ein Verfahren wie hierin beschrieben auszuführen. Die Erfindung betrifft des Weiteren ein nichtflüchtiges computerlesbares Speichermedium, auf welchem Programmcode gespeichert ist, bei dessen Ausführung ein Prozessor ein hierin beschriebenes Verfahren ausführt. Bezüglich des jeweiligen Verfahrens kann auf alle hierin beschriebenen Ausführungen und Varianten zurückgegriffen werden.

Als Ausgangslage kann beispielsweise ein AVP Typ 2-System mit einem Fahrzeug ohne Umfeldsensoren bzw. einem Systemkonzept, das ohne Sensoren im Fahrzeug auskommt, angesehen werden. Die Infrastruktur erfasst typischerweise das Fahrzeug kontinuierlich, ermittelt seine Position und sendet passende Wegpunkte an das Fahrzeug, so dass dieses ohne Gefahr in die geplante Parkposition manövrieren kann.

In unregelmäßigen Abständen kann nun beispielsweise das Fahrzeug bewusst vom vorgegebenen Kurs abweichen. Funktioniert die Infrastruktur wie geplant, so erfolgt innerhalb einer vorgegebenen Zeit eine neue Vorgabe von Wegpunkten an das Fahrzeug oder ein anderer Befehl zur Fahrzeugführung, beispielsweise ein Stoppsignal. Ist dies nicht der Fall, hält das Fahrzeug beispielsweise von selbst an, da davon auszugehen ist, dass die Infrastruktur nicht wie geplant bzw. wie notwendig funktioniert. Anschließend kann ein Signal versendet werden, um den Fehler zu melden. Das Signal kann beispielsweise ein Funksignal, insbesondere über Fahrzeug-zu-X-Kommunikation oder 3G/4G/5G/ etc. oder über Bluetooth, UWB (Ultrabreitband) oder WLAN oder über eine andere Funktechnologie gesendet werden. Es kann auch mittels optischer oder akustischer Mittel (beispielsweise Hupe oder Warnblinker) erfolgen. Bei einem Funksignal kann zusätzlich die Information mitgeschickt werden, an welcher Stelle die absichtliche Abweichung in welcher Form erfolgt ist, damit eine anschließende Fehlersuche einfacher wird.

Ist das Fahrzeug mit Umfeldsensoren ausgestattet, kann es die Abweichung von der vorgegebenen Bahn so auswählen, dass bestimmte Randbedingungen genauer geprüft werden. Hierzu sei auf die weiter oben bereits erwähnten Beispiele verwiesen.

Anstelle von oder zusätzlich zu Abweichungen von der Bahn können auch weitere Abweichungen vom Sollzustand durch das Fahrzeug ausgeführt werden, um eine Reaktion der Infrastruktur zu prüfen. Beispielsweise kann das Fahrzeug eine elektrisch betätigte Heckklappe öffnen, idealerweise aber nicht ausschließlich an einer Stelle, wo die Höhe nicht mehr ausreichen würde, um mit geöffneter Heckklappe zu fahren. Dabei ist die Erwartung, dass das Infrastruktursystem ein Stoppsignal sendet. Das Fahrzeug kann auch die Lichter abschalten, wobei die Erwartung ist, dass das Infrastruktursystem ein Stoppsignal sendet. Das Fahrzeug kann auch die Warnblinker aktivieren, wobei auch hier die Erwartung ist, dass das Infrastruktursystem ein Stoppsignal sendet.

Das System kann auch verwendet werden bei einem AVP Typ 3-System, wo sich Fahrzeug und Infrastruktur die Führungsaufgabe teilen. Hier kann die Prüfung zusätzlich dafür verwendet werden, dem Fahrzeug eine Entscheidung zu ermöglichen, wie stark die Information aus der Infrastruktur in die Fahrzeugführung einfließt und wie weit es sich rein auf seine Umfeldsensoren verlässt.

Es ist insbesondere ohne zusätzliche Sensoren möglich, die korrekte Funktion des Infrastruktursystems zu prüfen.

Außer bei Fahrzeugen, welche als übliche Personenkraftwagen ausgeführt sind, kann das hierin beschriebene Verfahren beispielsweise in einer Hafenlogistik, auf einem Flughafen, bei einer Logistik in Fabrikhallen oder auf Geländen unter Verwendung von autonom fahrenden Plattformen, bei mobilen Robotern oder anderen Einheiten verwendet werden.

Die Erfindung wird nun anhand der Zeichnung beschrieben. Dabei zeigt:

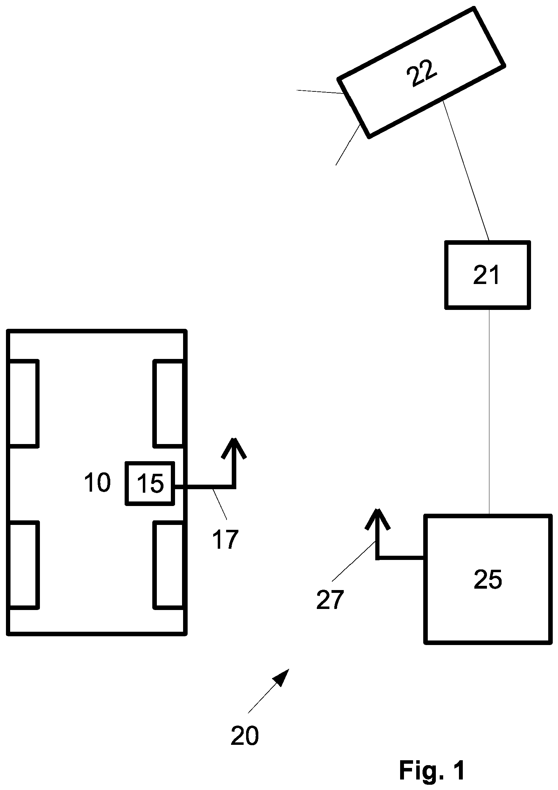

- Fig. 1:: eine Anordnung aus einem Fahrzeug und einer Infrastruktur.

Fig. 1 zeigt ein Fahrzeug 10 sowie eine Infrastruktur 20. Es handelt sich hierbei um eine rein schematische Darstellung, welche nachfolgend verwendet wird, um Aspekte der Funktionalität zu beschreiben.

Das Fahrzeug 10 weist ein Kommunikationsmodul 15 auf, an welchem eine Antenne 17 angeschlossen ist. Damit kann es mit der Infrastruktur 20 kommunizieren. Umfeldsensorik am Fahrzeug 10 ist zumindest gemäß einer Ausführung nicht nötig. Die Infrastruktur 20 weist eine zentrale Recheneinheit 21 auf, welche zentrale Steuerungsaufgaben übernimmt. Die Infrastruktur 20 weist eine Kamera 22 auf, welche das Fahrzeug 10 beobachtet. Typischerweise sind noch mehrere solcher Kameras und/oder andere Sensoriken vorhanden, die Kamera 22 dient hier lediglich als Beispiel. Die Infrastruktur 20 weist ferner ein Kommunikationsmodul 25 auf, an welchem ebenfalls eine Antenne 27 angeschlossen ist. Das Fahrzeug 10 bewegt sich durch ein Gebiet, welches von der Infrastruktur 20 kontrolliert wird. Hierzu erhält es über die Kommunikationsmodule 25, 15 Fahrvorgaben, welche Trajektorien enthalten oder aus welchen sich zumindest Trajektorien extrahieren lassen. Das Fahrzeug 10 folgt in einem Normalbetrieb diesen Trajektorien und wird dabei von der Infrastruktur 20 überwacht.

Zu bestimmten Zeitpunkten, beispielsweise zu durch Zufallsgenerator vorgegebenen Zeitpunkten, weicht das Fahrzeug 10 in zufälliger Weise von der vorgegebenen Trajektorie ab. Es wartet dann einen vorgegebenen Zeitraum, ob es von der Infrastruktur 20 einen Fehlerhinweis erhält. Dieser kann beispielsweise ein Stoppsignal beinhalten oder auch eine neue Trajektorie vorgeben. Wird ein solcher Fehlerhinweis erhalten, stellt das Fahrzeug 10 fest, dass die Infrastruktur 20 ordnungsgemäß funktioniert und geht in den Normalbetrieb zurück. Wird ein solcher Fehlerhinweis nicht innerhalb einer vorgegebenen Zeit erhalten, muss das Fahrzeug 10 davon ausgehen, dass die Infrastruktur 20 die Überwachungsaufgaben nicht korrekt wahrnimmt. Es wird somit typischerweise anhalten und eine Fehlermeldung mit Informationen über den Fehler aussenden. Dies erlaubt eine Sicherung dahingehend, dass durch eine Weiterfahrt des Fahrzeugs 10 ansonsten eventuell Sach- oder Personenschäden entstehen könnten.

Auch andere Parameter können von dem Fahrzeug 10 variiert werden, beispielsweise kann eine Warnblinkanlage eingeschaltet werden oder es kann eine Heckklappe geöffnet werden. Auch dabei kann die korrekte Reaktion der Infrastruktur 20 überprüft werden.

Allgemein sei darauf hingewiesen, dass unter Fahrzeug-zu-X-Kommunikation insbesondere eine direkte Kommunikation zwischen Fahrzeugen und/oder zwischen Fahrzeugen und Infrastruktureinrichtungen verstanden wird. Beispielsweise kann es sich also um Fahrzeug-zu-Fahrzeug-Kommunikation oder um Fahrzeug-zu-Infrastruktur-Kommunikation handeln. Beispielsweise kann eine Fahrzeug-zu-X-Kommunikation unter Verwendung der Standards IEEE 802.11p oder IEEE 1609.4 erfolgen. Weitere Beispiele für Kommunikationstechnologien umfassen LTE-V2X, 5G-V2X, C-V2X, WLAN, WiMax, UWB oder Bluetooth. Eine Fahrzeug-zu-X-Kommunikation kann auch als C2X-Kommunikation bezeichnet werden. Die Teilbereiche können als C2C (Car-to-Car) oder C2I (Car-to-Infrastructure) bezeichnet werden. Die Erfindung schließt jedoch Fahrzeug-zu-X-Kommunikation mit Vermittlung beispielsweise über ein Mobilfunknetz explizit nicht aus.

Erwähnte Schritte des erfindungsgemäßen Verfahrens können in der angegebenen Reihenfolge ausgeführt werden. Sie können jedoch auch in einer anderen Reihenfolge ausgeführt werden, soweit dies technisch sinnvoll ist. Das erfindungsgemäße Verfahren kann in einer seiner Ausführungen, beispielsweise mit einer bestimmten Zusammenstellung von Schritten, in der Weise ausgeführt werden, dass keine weiteren Schritte ausgeführt werden. Es können jedoch grundsätzlich auch weitere Schritte ausgeführt werden, auch solche welche nicht erwähnt sind.

Es sei darauf hingewiesen, dass in den Ansprüchen und in der Beschreibung Merkmale in Kombination beschrieben sein können, beispielsweise um das Verständnis zu erleichtern, obwohl diese auch separat voneinander verwendet werden können. Der Fachmann erkennt, dass solche Merkmale auch unabhängig voneinander mit anderen Merkmalen oder Merkmalskombinationen kombiniert werden können.

Rückbezüge in Unteransprüchen können bevorzugte Kombinationen der jeweiligen Merkmale kennzeichnen, schließen jedoch andere Merkmalskombinationen nicht aus.

### Bezugszeichenliste

- 10: Fahrzeug
- 15: Kommunikationsmodul
- 17: Antenne
- 20: Infrastruktur
- 21: Recheneinheit
- 22: Kamera
- 25: Kommunikationsmodul
- 27: Antenne

## Patentansprüche

1. Verfahren zum automatischen Steuern eines Fahrzeugs (10), wobei das Verfahren folgende Schritte aufweist:
- Empfangen einer Fahrvorgabe von einer externen Infrastruktur (20),
- in einem Normalbetrieb Steuern des Fahrzeugs (10) entlang einer Trajektorie, welche durch die Fahrvorgabe vorgegeben wird,
- in einem Testbetrieb Steuern des Fahrzeugs (10) entlang einer Testtrajektorie, welche von der durch die Fahrvorgabe vorgegebenen Trajektorie abweicht, und/oder mit Testparametern,
- wobei während des Testbetriebs überprüft wird, ob von der Infrastruktur (20) ein Fehlersignal empfangen wird, und
- wobei das Fahrzeug (10) gestoppt wird und/oder eine Fehlermeldung ausgegeben wird, wenn innerhalb eines vorgegebenen Zeitraums im Testbetrieb kein Fehlersignal empfangen wird.

2. . Verfahren nach Anspruch 1,
- wobei das Fehlersignal einen Fehlerhinweis und/oder ein Stoppsignal und/oder eine neue Trajektorie und/oder neue Wegpunkte beinhaltet.

3. . Verfahren nach Anspruch 1 oder 2,
- wobei die Fehlermeldung über eine Funkverbindung an die Infrastruktur (20) gesendet wird und/oder durch Betätigung einer optischen und/oder einer akustischen Warneinrichtung ausgegeben wird.

4. . Verfahren nach einem der vorhergehenden Ansprüche,
- wobei die Fehlermeldung Informationen über einen Standort des Fahrzeugs (10) und/oder über einen Kurs des Fahrzeugs (10) und/oder über die Trajektorie und/oder über die Testtrajektorie enthält.

5. . Verfahren nach einem der vorhergehenden Ansprüche,
- wobei nach Empfang des Fehlersignals in den Normalbetrieb gewechselt wird.

6. . Verfahren nach einem der vorhergehenden Ansprüche,
- wobei die Testparameter
- ein Öffnen einer Heckklappe oder eines anderen Elements am Fahrzeug (10),
- ein Abschalten eines oder mehrerer Lichter des Fahrzeugs (10), und/oder
- ein Aktivieren einer Warnblinkanlage oder eines oder mehrerer Lichter des Fahrzeugs (10)
vorgeben.

7. . Verfahren nach einem der vorhergehenden Ansprüche,
- wobei die Steuerung des Fahrzeugs (10) ohne Verwendung von Daten fahrzeugeigener Umfeldsensoren erfolgt.

8. . Verfahren nach einem der Ansprüche 1 bis 6,
- wobei die Steuerung des Fahrzeugs (10) mit Verwendung von Daten fahrzeugeigener Umfeldsensoren erfolgt, und
- wobei basierend auf einer Reaktion der Infrastruktur (20) auf den Testbetrieb die Steuerung hinsichtlich Gewichtung von Umfeldsensoren und Infrastruktur (20) geändert wird.

9. . Verfahren nach einem der vorhergehenden Ansprüche,
- wobei die Testtrajektorie mit einer zufälligen Abweichung von der Trajektorie festgelegt wird.

10. . Verfahren nach einem der vorhergehenden Ansprüche,
- wobei die Testtrajektorie mit einer vorgegebenen Abweichung von der Trajektorie festgelegt wird.

11. . Verfahren nach einem der vorhergehenden Ansprüche,
- wobei zu zufällig ausgewählten Zeitpunkten und/oder in regelmäßigen Abständen vom Normalbetrieb in den Testbetrieb gewechselt wird.

12. . Verfahren nach einem der vorhergehenden Ansprüche,
- wobei basierend auf Daten von fahrzeugeigenen Umfeldsensoren bestimmt wird, wann in den Testbetrieb gewechselt wird.

13. . Verfahren nach einem der vorhergehenden Ansprüche,
- wobei die Fahrvorgabe die Trajektorie dadurch vorgibt, dass sie die Trajektorie und/oder Wegpunkte beinhaltet.

## Claims

1. Method for automatically controlling a vehicle (10), wherein the method comprises the following steps:
- receiving a driving specification from an external infrastructure (20),
- in a normal mode, controlling the vehicle (10) along a trajectory specified by the driving specification,
- in a test mode, controlling the vehicle (10) along a test trajectory that deviates from the trajectory specified by the driving specification, and/or using test parameters,
- wherein during the test mode a check is performed to determine whether an error signal is received from the infrastructure (20), and
- wherein the vehicle (10) is stopped and/or an error message is output if no error signal is received in the test mode within a specified period of time.

2. Method according to Claim 1,
- wherein the error signal includes a fault report and/or a stop signal and/or a new trajectory and/or new waypoints.

3. Method according to Claim 1 or 2,
- wherein the error message is sent to the infrastructure (20) via a radio connection and/or is output by operating a visual and/or an audible warning device.

4. Method according to one of the preceding claims,
- wherein the error message contains information about a location of the vehicle (10) and/or about a course of the vehicle (10) and/or about the trajectory and/or about the test trajectory.

5. Method according to one of the preceding claims,
- wherein the vehicle switches to the normal mode after the error signal has been received.

6. Method according to one of the preceding claims,
- wherein the test parameters specify
- opening of a tailgate or another element on the vehicle (10),
- switching-off of one or more lights of the vehicle (10), and/or
- activation of hazard warning lights or one or more lights of the vehicle (10).

7. Method according to one of the preceding claims,
- wherein the vehicle (10) is controlled without using data from the vehicle's own environment sensors.

8. Method according to one of Claims 1 to 6,
- wherein the vehicle (10) is controlled using data from the vehicle's own environment sensors, and
- wherein a reaction of the infrastructure (20) to the test mode is taken as a basis for changing the control in terms of the weighting of the environment sensors and the infrastructure (20).

9. Method according to one of the preceding claims,
- wherein the test trajectory is defined using a random deviation from the trajectory.

10. Method according to one of the preceding claims,
- wherein the test trajectory is defined using a specified deviation from the trajectory.

11. Method according to one of the preceding claims,
- wherein the vehicle switches from the normal mode to the test mode at randomly selected times and/or at regular intervals.

12. Method according to one of the preceding claims,
- wherein data from the vehicle's own environment sensors are taken as a basis for determining when to switch to the test mode.

13. Method according to one of the preceding claims,
- wherein the driving specification specifies the trajectory by including the trajectory and/or waypoints.

## Revendications

1. Procédé de commande automatique d'un véhicule (10), le procédé comprenant les étapes suivantes :
- réception d'une consigne de conduite de la part d'une infrastructure externe (20),
- dans un régime normal, commande du véhicule (10) le long d'une trajectoire, laquelle est prédéfinie par la consigne de conduite,
- dans un régime d'essai, commande du véhicule (10) le long d'une trajectoire d'essai, laquelle s'écarte de la trajectoire prédéfinie par la consigne de conduite et/ou avec des paramètres d'essai,
- un contrôle étant effectué pendant le régime d'essai, afin de vérifier si un signal d'erreur est reçu de la part de l'infrastructure (20), et
- le véhicule (10) étant arrêté et/ou un message d'erreur étant émis si aucun signal d'erreur n'est reçu dans un délai prédéfini en régime d'essai.

2. Procédé selon la revendication 1,
- le signal d'erreur comprenant une notification d'erreur et/ou un signal d'arrêt et/ou une nouvelle trajectoire et/ou de nouveaux points de cheminement.

3. Procédé selon la revendication 1 ou 2,
- le message d'erreur étant envoyé à l'infrastructure (20) par le biais d'une liaison radio et/ou émis par actionnement d'un dispositif d'avertissement visuel et/ou sonore.

4. Procédé selon l'une des revendications précédentes,
- le message d'erreur contenant des informations à propos d'un emplacement du véhicule (10) et/ou à propos d'un parcours du véhicule (10) et/ou à propos de la trajectoire et/ou à propos de la trajectoire d'essai.

5. Procédé selon l'une des revendications précédentes,
- un passage au régime normal s'effectuant après réception du signal d'erreur.

6. Procédé selon l'une des revendications précédentes,
- les paramètres d'essai prédéfinissant
- une ouverture d'un hayon ou d'un autre élément sur le véhicule (10),
- une extinction d'un ou plusieurs feux du véhicule (10), et/ou
- une activation d'un système de feux de détresse ou d'un ou plusieurs feux du véhicule (10).

7. Procédé selon l'une des revendications précédentes,
- la commande du véhicule (10) s'effectuant sans utilisation de données de capteurs environnementaux propres au véhicule.

8. Procédé selon l'une des revendications 1 à 6,
- la commande du véhicule (10) s'effectuant avec utilisation de données de capteurs environnementaux propres au véhicule, et
- la commande étant modifiée en termes de pondération des capteurs environnementaux et de l'infrastructure (20) sur la base d'une réaction de l'infrastructure (20) au régime d'essai.

9. Procédé selon l'une des revendications précédentes,
- la trajectoire d'essai étant définie avec un écart aléatoire par rapport à la trajectoire.

10. Procédé selon l'une des revendications précédentes,
- la trajectoire d'essai étant définie avec un écart prédéfini par rapport à la trajectoire.

11. Procédé selon l'une des revendications précédentes,
- le passage du régime normal au régime d'essai s'effectuant à des moments choisis aléatoirement et/ou à intervalles réguliers.

12. Procédé selon l'une des revendications précédentes,
- le passage au régime d'essai étant déterminé sur la base des données de capteurs environnementaux propres au véhicule.

13. Procédé selon l'une des revendications précédentes,
- la consigne de conduite prédéfinissant la trajectoire en ce qu'elle contient la trajectoire et/ou les points de cheminement.
